# EUROPEAN PATENT SPECIFICATION

(11) **EP 3 110 027 B1**
(45) Date of publication and mention of the grant of the patent: **08.05.2019**
(21) Application number: 15748663.0
(22) Date of filing: 18.02.2015
(51) Int. Cl.: H04B 3/54, H05B 37/02

(54) **COMMUNICATION DEVICE USING POWER LINE AND LED LIGHTING SYSTEM USING SAME**
KOMMUNIKATIONSVORRICHTUNG ÜBER EINE STROMLEITUNG UND LED-BELEUCHTUNGSSYSTEM DAMIT
DISPOSITIF DE COMMUNICATION UTILISANT UNE LIGNE ÉLECTRIQUE ET SYSTÈME D'ÉCLAIRAGE À DEL UTILISANT CELUI-CI

(30) Priority: 17.02.2015 KR 20150024486
(43) Date of publication of application: 28.12.2016
(73) Proprietor: Softkernel Co., Ltd., Siheung-si, Gyeonggi-do 429-793 (KR)
(72) Inventor: PARK, Kwang youn, Seoul 134-761 (KR); LEE, sangheon, Siheung-si Gyeonggi-do 429-252 (KR); PARK, Jae Heung, Incheon 403-849 (KR); KIM, Jung Ryul, Seoul 156-878 (KR)
(74) Representative: Ter Meer Steinmeister & Partner
(86) International application number: PCT/KR2015/001671
(87) International publication number: WO 2015/122753

(56) References cited:
- JP-A- 2013 089 564
- KR-A- 20130 026 103
- KR-B1- 101 277 650
- KR-B1- 101 278 125
- US-A1- 2014 320 020
- US-B1- 6 734 784

## Description

### [Technical Field]

The present invention relates to a communication device using powerlines which can transmit and receive control data and so on by using the powerlines, and an LED(Light Emitting Diode) lighting system using the communication device which can control the LED lighting.

### [Background Art]

Recently, the interest on an illumination device or an illumination system using an LED(Light Emitting Diode) has increased dramastically. An LED lighting device has an advantage that power consumption might be less and their life is semi-permanent compared to a fluorescent lamp, an incandescent lamp, and a halogen lamp which have been previously used.

Lighting devices are installed at present in most households or buildings. These lighting devices are driven by using mostly alternating current with high power. In contrast, an LED is generally constructed by a PN junction structure and driven by using direct current with low power. The present LED lighting device has been developed and supplied in the light of compatibility of the existing lighting device and also suggested a construction which is directly connected with the existing electric wiring being supplied alternating current and then can be used. For this, a rectifying member and a separate driving member are equipped with the LED lighting device. Also, to solve the above problem, an LED driver in which an LED is driven by using alternating current has been introduced. However, there was a disadvantage that since the LED driver is very high-priced, the price of the lighting device becomes high.

On the other hand, an LED lighting device has an advantage that a lighting control, which is called a dimming control, is very easy. An LED illumination device can not only implement various illumination environments but also reduce more power consumption through a dimming control. This dimming control is realized through a method for controlling the amount of power being provided to an LED or an LED module. As mentioned above, a driving member for driving an LED or an LED module is equipped with an LED module or an LED lighting device. The driving member exercises, for example, a dimming control by controlling duty control (PWM: Pulse Width Modulation control) of driving power being supplied to an LED or an LED module. The driving member exercises a dimming control according to control data being supplied from the outside. The supply of control data to the driving member is performed by a separate communication member. On this account, a member for transmitting and receiving control data by wire or wireless is required to the driving member.

United States Patent Application No: 2014-320020 discloses a control system that includes a load including an operative part, and a control device for supplying AC power to the load through a power line and operating the operative part. The control device includes an interruption mechanism and a transmission mechanism. The load includes a controller. The transmission mechanism transmits a predetermined control signal to the load through the power line by blocking the power supply to the load by the interruption mechanism for a time duration shorter than a half cycle of AC output. The controller controls the operative part based on the control signal received from the control device.

Korean Patent No: 10-1277650 discloses a dimming control device using the amplitude change of common power in PLC (Power Line Communication) and a method thereof to eliminate the limitation of transmission power without constructing a special communication line for transmitting a control signal. A voltage change device of a transmission end changes voltages in a predetermined period based on a zero crossing point of an input power waveform. The voltage change device transmits changed voltages including transmission data. The voltage change device measures RMS (Root Mean Square) voltages with the zero crossing point. The voltage change device receives the transmission data from the changed voltages.

Korean Patent Application No: 2013-0026103 discloses a LED lighting management system and a LED lighting management method to easily manage by classifying ID information into arbitrary ID groups and allocating management information in the ID group. A lighting power line modem performs power line communication. A lighting control unit controls a LED light source and the lighting power line modem. The lighting control unit stores ID information allocated to each of one or more LED lighting device. A memory stores a management program managing one or more LED lighting device. A processor performs the management program stored in the memory.

Japanese Patent Application No: 2013-089564 discloses a lighting control system that is able to restrain occupancy of a signal line by interruption communication even if an illumination load blinks due to a factor such as end-of-life. A control communication unit in a brightness sensor terminal comprises a control communication unit which performs polling communication for transmitting a supervisory signal instructing light control to change an illuminance measurement value within an illuminance range if the illuminance measurement value by a sensor element is out of a prescribed illuminance range when a request signal from a lighting control device is received, and interruption communication for transmitting a supervisory signal instructing light control to restrain an illuminance change if there is occurrence of an interruption trigger about which the illuminance measurement value changes at or above a prescribed ratio per unit time; and an interruption communication restraint unit which sets up an interruption restraint period for restraining the control communication unit from executing interruption communication if the occurrence number of interruption triggers per prescribed time becomes at or above a prescribed number.

Generally, to perform wireless communication, many high-priced components are required. This causes increases of the manufacturing cost, power consumption, and the maintenance fee of the LED lighting device. Also, to perform wire communication, since a separate communication line is required, an installation work of a lighting device become cumbersome, especially, when installing an LED lighting device by using a light wiring which had been installed previously, there exist many difficulties.

Korean Patent No.10-1142106(title of invention: CONSTANT LED CONVERTER CAPABLE OF GROUP DIMMING) discloses that a device for controlling dimming of an LED group through a method for changing the size of input voltage supplying to an LED lighting device is introduced. In this patent, the supply power being supplied to an LED or an LED module is set and changed into, for example, 220V, 210V, 200V, and 190V and so on, and at an LED side, a converter controls properly the amount of power being supplied to an LED according to the voltage of the supply power being supplied from the outside, thereby controlling dimming.

However, in the above patent, a control member and a converter, that is, between driving members, the communication does not exercise, since only the converter exercises the dimming control based on the voltage of the driving power being supplied from the outside, various driving controls, that is, various dimming controls are impossible, especially, the stability of operation to an LED lighting device cannot be secured.

Also, Korean Patent No. 10-0261512 (title of the invention: REMOTE CONTROL DEVICE USING BI-DIRECTIONAL POWER LINE COMMUNICATION AND A CONTROL METHOD THOEROF) and Korean Patent No. 10-0473526 (title of the invention: REMOTE CONTROL DEVICE USING POWER LINE COMMUNICATION) disclose a construction that a bi-directional communion is performed by power line, thereby capable of remote controlling a power device. However, these devices have problems that a construction is complicate and its manufacturing cost is high.

### [Disclosure]

### [Technical Problem]

In consideration of the above-described problems of the prior art, it is an object of the present invention to provide a communication device using powerlines in which a bi-directional communication can be performed by using powerlines in a simple method and simple construction.

Another object of the present invention is to provide an LED lighting system by using the above communication device.

### [Technical Solution]

The above identified objects are solved by the features of the independent claims. There is provided a communication device for performing communication using powerlines comprising:
a first control member coupled with the powerlines; and
a second control member installed to a load,
wherein the first control member and the second control member performs data transmission and reception by using the powerlines,
the first control member changes and sets the voltage effective value of power one period being supplied to the load through the powerlines according to the value of data transmitting to the second control member, and
the second control member changes and sets the current level corresponding to a first section of power one period being supplied to the load through the powerlines according to the value of data transmitting to the first control member.

Preferably, the first section includes 0.5ms section just before the zero crossing of power current.

Further, preferably, the first section includes 0.5ms section that the power current starts rising from the zero crossing point.

There is provided a communication device for performing communication using powerlines comprising:
a first control member coupled with the powerlines; and
a second control member installed to a load,
wherein the first control member and the second control member performs data transmission and reception by using the powerlines, and
the first control member changes and sets the voltage level corresponding to a first section of power one period being supplied to the load through the powerlines according to the value of data transmitting to the second control member.

Preferably, the second control member changes and sets the current level corresponding to a second section of power one period being supplied to the load through the powerlines according to the value of data transmitting to the first control member.

Further, preferably, the first section includes 0.5ms section that the power voltage starts rising from the zero crossing point.

Further, preferably, the first section includes 0.5ms section that the power current starts falling from the zero crossing point.

Further, preferably, the first section includes 0.5ms section just before the zero crossing of power current.

Further, preferably, the first section includes 0.5ms section after the zero crossing of power current.

There is provided a communication device for performing communication using powerlines comprising:
a control device coupled with the powerlines; and
a load control device installed to a load,
wherein the control device and the load control device performs data transmission and reception by using the powerlines,
the control device comprises a first voltage detecting member coupled with the powerlines and for detecting change of power voltage, a voltage setting member coupled with the powerlines and for changing and setting the effective voltage of power voltage supplied to the load, and a first control member for controlling the operation of the voltage setting member,
the first control member changes and sets the effective voltage of power voltage being supplied to the load by driving the voltage setting member according to the value of data transmitting to the load control member, and
the load control device comprises a second voltage detecting member coupled with the powerlines and for detecting change of power voltage, and a second control member for receiving data being transmitted from the control device by discriminating the effective value of power voltage on the basis of the detecting voltage of the second voltage detecting member.

Preferably, the control device transmits 1 bit data per power one period.

Further, preferably, the first control member discriminates the zero crossing point of power voltage on the basis of detecting voltage by the first voltage detecting member, and changes and sets the effective voltage of power voltage by driving the voltage setting member at the zero crossing time of power voltage.

Further, preferably, the load control device comprises a power member for producing power for driving the load by using input power,
the power member cuts off flow of power current being transmitted to the load through the powerlines during the first section of power one period, the load control member further comprises a pulse generating member for generating current pulse during the first section, the second control member drives the pulse generating member by corresponding to the data value being transmitted to the control device, and
wherein the control device further comprises a current detecting member for detecting power current, and the first control member receives data from the load control device by detecting the current pulse during the first section.

Further, preferably, the first section includes 0.5ms section just before the zero crossing of power current.

Further, preferably, the first section includes 0.5ms section after the zero crossing of power current.

Further, preferably, the control device further comprises a communication member for performing communication with the outside.

There is provided a communication device for performing communication using powerlines comprising:
a control device coupled with the powerlines; and
a load control device installed to a load,
wherein the control device and the load control device performs data transmission and reception by using the powerlines,
the control device comprises a first voltage detecting member coupled with the powerlines and for detecting change of power voltage, a voltage cutoff member coupled with the powerlines and for performing cutoff of power voltage supplied to the load, and a first control member for controlling the operation of the voltage cutoff member,
the first control member drives selectively the voltage cutoff member according to the value of data transmitting to the load control member, and
the load control device comprises a second voltage detecting member coupled with the powerlines and for detecting change of power voltage, and a second control member for receiving data being transmitted from the control device on the basis of the detecting voltage of the second voltage detecting member.

Preferably, the control device drives selectively the voltage cutoff member during the first section of one period of power voltage.

Further, preferably, the first section includes 0.5ms section that the power voltage starts rising from the zero crossing point.

Further, preferably, the first section includes 0.5ms section that the power current starts falling from the zero crossing point.

Further, preferably, the control device drives selectively the voltage cutoff member during the first section in which the power voltage starts rising from the zero crossing point and the second section in which the power current starts falling from the zero crossing point.

Further, preferably, the load control device comprises a power member for producing power for driving the load by using input power,
the power member cuts off flow of power current being transmitted to the load through the powerlines during the third or fourth section of power one period, the load control member further comprises a pulse generating member for generating current pulse during the third or fourth section, the second control member drives the pulse generating member by corresponding to the data value being transmitted to the control device, and
wherein the control device further comprises a current detecting member for detecting power current, and the first control member receives data from the load control device by detecting the current pulse during the third or fourth section.

Further, preferably, the third section includes 0.5ms section just before the zero crossing of power current.

Further, preferably, the fourth section includes 0.5ms section after the zero crossing of power current.

Further, preferably, the control device further comprises a communication member for performing communication with the outside.

There is provided an LED lighting system comprising:
one or more control devices coupled with commercial power source through powerlines;
one or more LED illumination devices coupled with control devices, respectively, through the powerlines; and
a management device for performing communication with the control devices;
wherein the control devices and the LED lighting device perform data transmission and reception by using the powerlines,
the data communication from the control devices to the LED lighting device is executed by broadcasting method, and
the data communication from the LED lighting device to the control devices is executed by polling method.

Preferably, the LED lighting device comprises one or more group IDs, and the control devices transmit dimming data to the LED lighting device by using the group IDs.

### [Advantageous Effects]

The communication device using a power line and an LED lighting system using the same according to the present invention having the above-described configuration has effects as follows. A control device and a load, that is, an LED lighting device can transmit and receive data by using powerlines. Accordingly, even in that case that an LED lighting device is installed by using the existing electric wiring, an additional wiring work will not be required. Also, according to the present invention, since a manager can integrally control a plurality of LED lighting devices installed at the inside of the building and so on by using a management device, the work of the manager has become very convenient.

### [Description of Drawings]

FIG. 1 is a basic construction view explaining a basic concept according to an embodiment of the present invention.
FIGS. 2 and 3 are views explaining a downlink data transmission method.
FIG. 4 is a view explaining an uplink data transmission method.
FIG. 5 is a block construction view illustrating the first construction example of a control device 10 of FIG. 1.
FIG. 6 is a circuit construction view illustrating specifically the construction of a voltage setting member 15 of FIG. 5.
FIG. 7 is a block construction view illustrating the second construction example of the control device 10 of FIG. 1.
FIG. 8 is a circuit construction view illustrating specifically the construction of a power cutoff member 71 of FIG. 7.
FIG. 9 is a construction view illustrating the construction of a load control member 20 of FIG. 1.
FIG. 10 is a construction view illustrating the construction example of an LED illumination device according to the present invention.
FIG. 11 is a block construction view illustrating the system construction of an LED illumination device according to the present invention.
FIG. 12 is a view illustrating an example of a data format being transmitted and received between a control device 20 and an LED lighting device 300 in FIG. 11.

### [Mode for Invention]

Hereinafter, embodiments according to the present invention will be described in detail with reference to the accompanying drawings. The embodiments are preferred embodiments of the present invention and do not limit the scopes of claims. This invention has been described in its presently contemplated best mode, and it is clear that it is susceptible to numerous modifications, modes and embodiments within the ability of those skilled in the art and without the exercise of the inventive faculty.

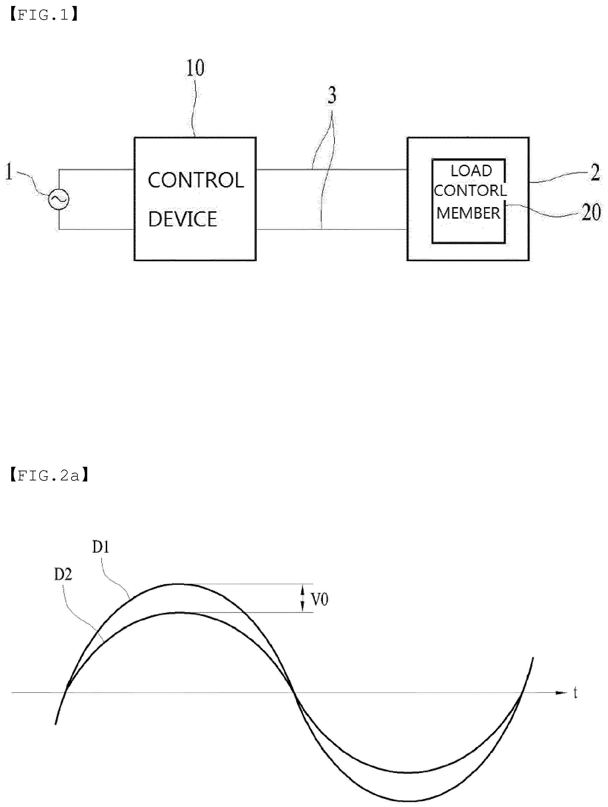

FIG. 1 is a basic construction view explaining a basic concept according to an embodiment of the present invention.

As shown in FIG. 1, a load 2 is electrically connected with commercial power source through power lines 3. A plurality of loads can be connected to the power lines 3 and in that case, loads 2 are connected with the power lines in series or in parallel. A control device 10 is equipped with a side of the commercial power source 1. A load control member 20 is equipped with the load 2 to control the operation of the load. The load control member 20 is connected with the control device 10 through the power lines 3.

The control device 10 can include a user interface for a manager or a wire or wireless communication member for performing communication with a separate management device. The control device 10 produces control data for controlling the operation of the load 2 and then transmit it to the load control member 20 through the powerlines 3. The load control member 20 receives control data transmitted from the powerlines 3, and then drives and controls the load 2.

Also, the load control member 20 produces the proper response data including acknowledge data and so on and transmit it to the control device 10 through the powerlines 3. An uplink for transmitting data did not be necessarily required and can be equipped selectively.

As a downlink data transmitting method for transmitting data from the control device 10 to the load control member 20, we can consider the two-kind of methods as follows:
1.According to whether the data transmitted to the load 2 is "0" or "1", the voltage maximum value or voltage effective value of one period of power is set differently (First method).
2.A constant section of one period of power being supplied to the load 2 is set a data section and the power voltage of the data section is selectively set to low level, that is, "0" level according to whether the data being transmitted to the load 2 is "0" or "1".(Second method).

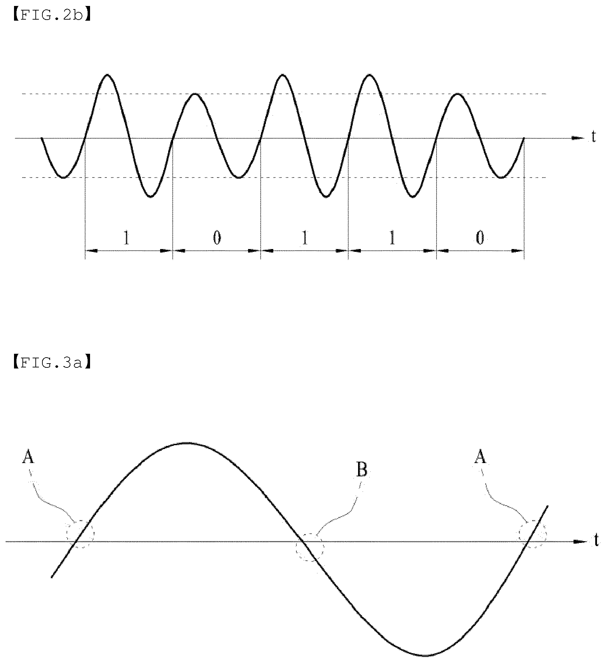

FIG. 2a shows a view illustrating a voltage waveform of power supplied to the load 2 according to the first method. FIG. 2b shows a first power voltage D1 and a second power voltage D2.

In the first power voltage D1 and the second power voltage D2, period and phase according to the time are identical, whereas their maximum values or voltage effective values are set differently. The maximum value of the first voltage D1 is set, for example, 220V, and the maximum value of the second power voltage D2, for example, 200V. According this, the difference value V0 of the maximum values of the first and second power voltages D1 and D2 is set as 20V, that is, about 10% of the maximum value of the first power voltage D1. Of course, the maximum values of the first and second power voltages D1 and D2 are not limited to the specific value.

In consideration of the voltage effective value, since the first power voltage D1 has AC 220V and the second power voltage D2 has AC 200V, the voltage effective value of the first power voltage D1 is about 311V and the voltage effective value of the second power voltage D2 is about 283V.

In this method, as shown in FIG 1, the control device 10 supplies, for example, the first power voltage D1 to the load 2 at the state that data are not transmitted, i.e., an idle state. In the state that data are transmitted, the control device supplies the second power voltage D2 with data "1" and the first power voltage D1 with data "0" to the load 2. Also, at the idle state, in case that the power voltage being supplied to the load 2 is set as the second power voltage D2, when transmitting data, for example, the first power voltage is set as data "1" and the second power voltage D2 as data "0".

FIG. 2b is a view illustrating waveform of power voltage being supplied from the control device 10 to the load 2, when the first power voltage D1 is data "1" and the second power voltage D2 is data "0", in case that the control data "10110" are transmitted from the control device 10 to the load 2.

Also, in the above method, 1 bit data are transmitted during one period of power and when plural kinds of the maximum values or voltage effective values of one period are set, plural data can be transmitted during one period of power.

As described above, in the second method, that is, that a constant section of one period of power is set as a data section, a data section for transmitting data firstly is selected properly. The data section can be set arbitrarily and desirably, as shown in FIG. 3a, A section that the power voltage is rising from zero crossing point and B section that the power voltage is falling from zero crossing point are adopted.

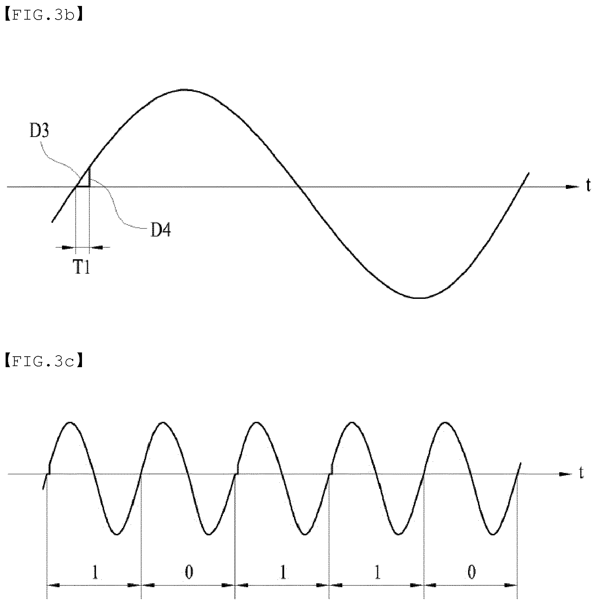

FIG. 3b is a view illustrating voltage waveform of power being supplied to the load 2, in case that 1 bit data, that is, data "0" or "1" are transmitted by using A section. In the FIG. 3b, the third power voltage D3 and the fourth power voltage D4 are illustrated. The third power voltage D3 is the same as the general power voltage. Regarding this, the period and phase according to time of the fourth power voltage D4 are the same as those of third power voltage D3, whereas a constant section that the power voltage is rising from zero crossing point at one period of power, that is, a data section T1 is set as a time section with the degree of 0.5 ms from zero crossing point desirably. The length of the data section T1 can be changed properly.

In the data section T1, the voltage level is selectively set as "0" level according to whether data being transmitted to the load 2 are "0" or "1". That is, the control device 10 of FIG. 1, supplies, for example, the third power voltage D3 to the load 2 at the idle state, that is, the state not being transmitted data, whereas at the state being transmitted data, that is, the fourth power voltage D4 as data "1" and the third power voltage D3 as data "0" are supplied to the load 2.

FIG. 3c, likewise FIG. 2b, is a view illustrating power voltage supplied from the control device 10 to load 2 when the control data "10110" are transmitted from the control device 10 to the load 2.

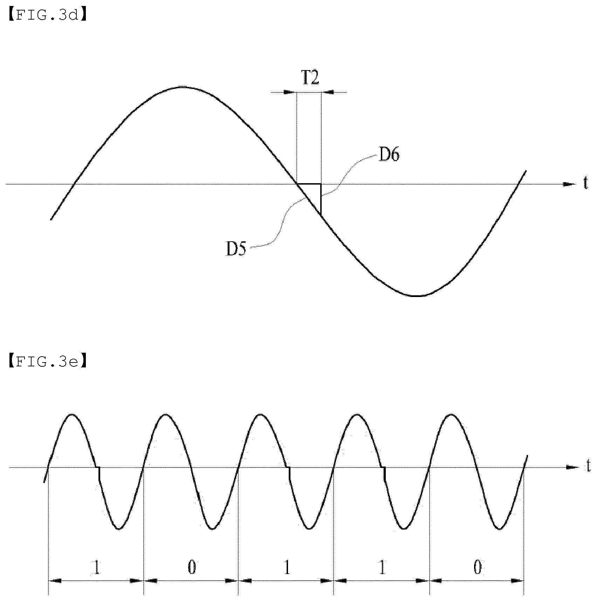

FIG. 3d is a view illustrating voltage waveform of power being supplied to the load 2, in case that 1 bit data, that is, data "0" or "1" are transmitted by using B section, that is, a section that the power voltage is falling from zero crossing point. FIG. 3d illustrates the fifth power voltage D5 and the sixth power voltage D6. The fifth power voltage D5 is the same as the general power voltage. Regarding this, the period and phase according to time of the sixth power voltage D6 are the same as those of fifth power voltage D5, whereas a constant section that the power voltage is falling from zero crossing point at one period of power, that is, a data section T2 is set as low level, for example, "0" level. Also, in this case, the data section T2 is set as a time section with the degree of 0.5 ms from zero crossing point desirably. The length of the data section T2 can be changed properly.

Also, in this example, tn the data section T2, the voltage level is selectively set as "0" level according to whether data being transmitted to the load 2 are "0" or "1". That is, the control device 10 of FIG. 1, supplies, for example, the fifth power voltage D5 to the load 2 at the idle state, that is, the state not being transmitted data, whereas at the state being transmitted data, that is, the sixth power voltage D6 as data "1" and the fifth power voltage D5 as data "0" are supplied to the load 2.

FIG. 3c, according to an embodiment of the present invention, is a view illustrating waveform of power voltage supplied from the control device 10 to load 2 when the control data "10110" are transmitted from the control device 10 to the load 2.

Also, in another embodiment of the present invention, data "1" and data "0" are transmitted respectively by using A section and B section of FIG. 3a together. For example, the control device 10 supplies normal power voltage to the load 2 at the idle state, that is, the state not being transmitted data, whereas at the state being transmitted data, when transmitting data "1", the power voltage in which A section is set as data "1" is transmitted to the load 2, and when transmitting data "0", the power voltage in which B section is set as data "0" to the load 2.

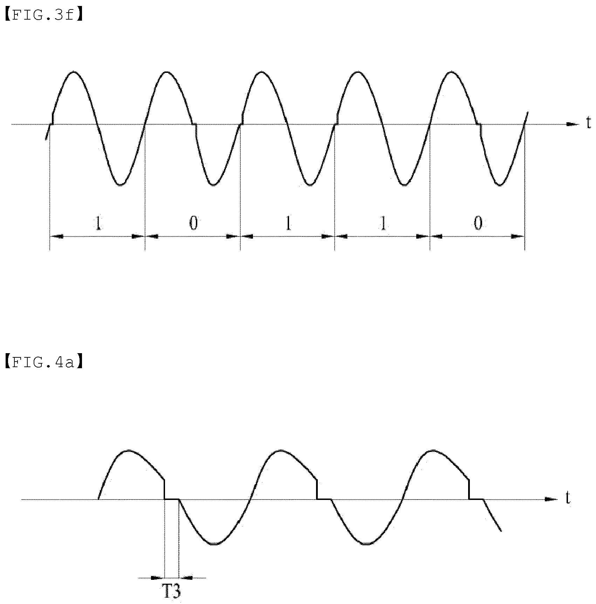

FIG. 3f, according to an embodiment of the present invention, is a view illustrating waveform of power voltage supplied from the control device 10 to load 2 when the control data "10110" are transmitted from the control device 10 to the load 2.

In this case, the following method also can be adopted: when transmitting data "1", B section is set as "0" level and when transmitting data "0", A section is set as "0" level.

Also, in the method of FIG. 3, as mentioned above, although a case that 1 bit data per one period of power voltage are transmitted is explained as an example, the following method can be implemented: total 2 bit data per one period of power voltage can be transmitted by transmitting one bit data to A section and B section, respectively.

In addition, an uplink data transmission method for transmitting data from a load control member 20 equipped to a load 2 side to the control device 10 will be described.

Referring to FIG. 1, the driving power for the load 2 is supplied from commercial power source 1 to the load 2 side. At this time, to be supplied driving current to the load 2, commercial power source 1 and the load 2 must be connected electrically. If the load 2 makes the power line open, the electrical combination between commercial line 1 and load 2 is disconnected and then driving current flowing from commercial line 1 to load 2 is cut off.

In the present invention, a load control member 20 transmits data to the control device 10 as a method for being cut off the flow of driving current between the control device and the load control member 20. At this time, the section for being cut off the driving current is determined beforehand between the control device 10 and the load control member 20. In an embodiment below, an uplink data section for transmitting data from the load control member 20 to the control device 10 is set as a specific section among one period of power voltage, preferably, for example, 0.5ms section falling power voltage to zero crossing point.

Here, the reason why the uplink data section is set as the section falling power voltage to zero crossing point is to prevent downlink data section T2 and uplink data section T1 from superposing, when down link data transmission and uplink data transmission are running simultaneously at the above the second method for transmitting data from the control device 10 to the load control member 20. In a case that the control device 10 is set according to the first method and so transmit control data to the load control member 20, data sections T1 and T2 of FIG. 3 can be used as an uplink data section.

Also, in a case that a downlink data transmission and an uplink data transmission are set to be executed at other power voltages, data sections T1 and T2 of FIG. 3 can be used as an uplink data section.

In a method for transmitting data by using the uplink data section, firstly, likewise the downlink data transmission as described above, it can be considered that according to whether the data transmitting from the load control member 20 to the control device 10 are "0" or "1", the current value of the uplink data section is set selectively as low level, for example, "0" level.

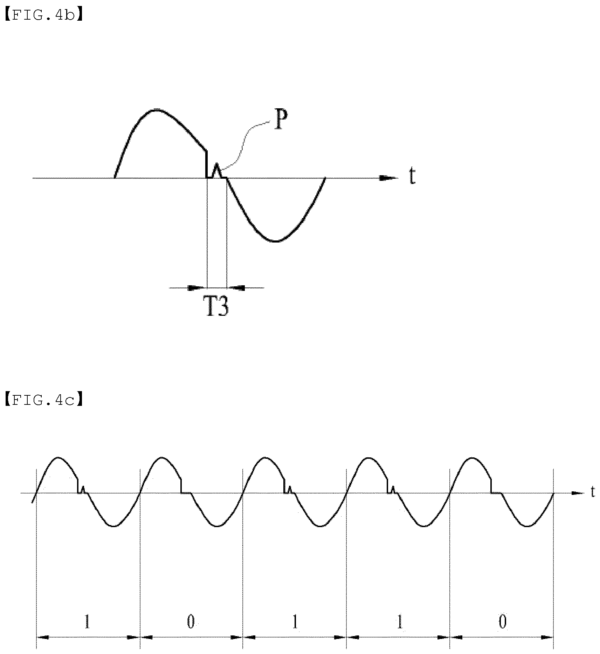

Also, as a preferred method, as shown in FIG. 4a, during the uplink data section T3, the current value of driving current being supplied to the load 2 is basically set as "0" level, the current pulse P is inserted into the uplink data section T3, as shown in FIG. 4b, according to whether data transmitted from the load control member 20 to the control device 10 are "0" or "1".

FIG. 4c, when a case that pulse P is inserted into the uplink data section T3 is defined as data "1", is a view illustrating driving current waveforms flowing from commercial power 1 to load 2 when the response data "10110" are transmitted from the load control member 20 to the load 2.

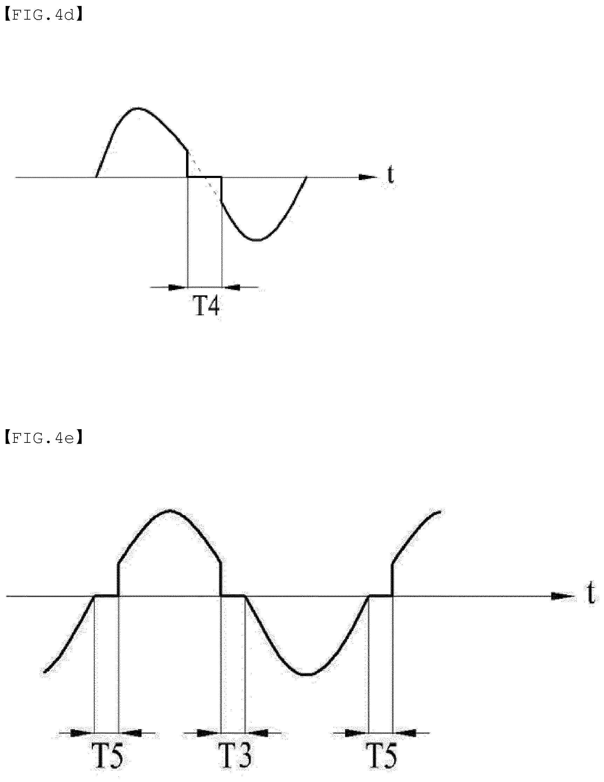

Also, in another embodiment of the present invention, as shown in FIG. 4d, the uplink data section T4 is set as total 1ms by including 0.5ms section falling power voltage from the first direction to zero crossing point and 0.5ms section rising power voltage from the second direction to zero crossing point again. This is for the control device 10 to recognize stably data transmitted from the load control member 20.

In the embodiments of FIGS. 4a to 4d, an uplink data section is set to a section falling power voltage from the first direction to zero crossing point. According this, an amount of data transmission is set as one bit to one period of power. In another embodiment of the present invention, the uplink data section, as shown in FIG. 4e, is set as two sections of T3 section falling power current from the first direction to zero crossing point and T5 section rising power current from the first direction to zero crossing point. In this embodiment, since data are transmitted by using two sections during one period of power current, an amount of data transmission is set as two bits to power one period.

In addition, a device for performing transmission and reception of data according to the data transmission and reception method will be described. Hereinafter, to explain in simple, a downlink data transmission is executed by the first method illustrated in FIG. 2 and the second method illustrated in FIGS. 3b and 3c, and an uplink data transmission is executed by a method illustrated in FIGS. 4b and 4c.

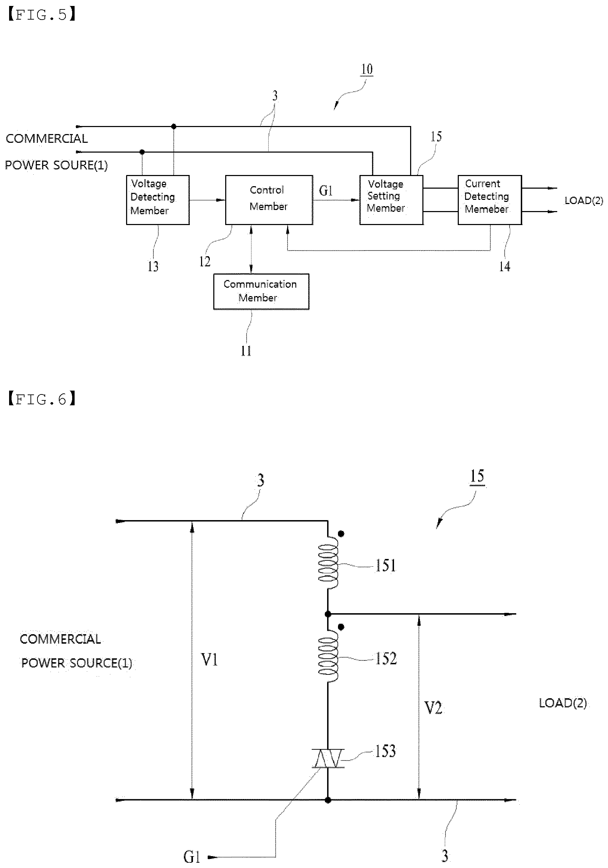

FIG. 5 is a block construction view illustrating a construction of a control device 10 according to the first embodiment of the present invention. As shown in FIG. 5, the construction of the control device 10 will be described: the voltage effective values of power one period to be supplied to the load 2 are set differently according to the first method illustrated in FIGS. 2a and 2b, that is, whether data transmitted to the load 2 are "0" or "1".

The control device 10 has selectively a communication member 11. A user interface for a manager or a wire or wireless communication member for performing communication with a separate management device can be adopted as the communication member 11. A control member 12 consists of, for example, a microprocessor. When a control commend is inputted from the communication member 11, on the basis of this, the control member 12 performs data communication with a load 2, more specifically, a load control member 20, thereby controlling driving of the load 2.

As shown in FIG. 5, a voltage detecting member 13, a current detecting member 14 and a voltage setting member 15 are connected with the powerlines 3.The voltage detecting member 13 detects power voltage supplied to the load 2 and then provides it to the control member 12. In the power voltage supplied to the load 2, for example, since its maximum value is 220V, the control member 12 cannot detect directly the change of power voltage. The voltage detecting member 13, which is not depicted specifically on a drawing, consists of a resistor divider circuit. According this, commercial power source 1 is divided into, for example, voltage of 5V below and then inputted to the control member 12. The control member 12 discriminates the zero crossing point, downlink data section and uplink data section of power voltage on the basis of the input voltage change from the voltage detecting member 13.

The current detecting member 14 is to receive uplink data transmitted from the load control member 20 to the control device 10. The current detecting member 14 consists of current transformer installed at the powerline 3, a bridge rectifier circuit, for example, for rectifying the output current of the current transformer, and a resistor divider circuit connected with an output end of the rectifying circuit. That is, the current detecting member 14 inputs voltage of a level corresponding to the current value supplied to the load 2 through the powerline 3. Since a specific construction is not be required as the current detecting member 14, its specific construction will not be illustrated.

The voltage setting member 15 is to transmit data to the load control member 20. The voltage setting member 15 changes power voltage being supplied to the load 2 according to a gate signal inputted from the control member 12.

FIG. 6 is a circuit diagram illustrating an example of a construction of the voltage setting member 15. As shown in FIG. 6, the voltage setting member 15 comprises a primary coil 151 connected with a side of the powerline 3 in series, a secondary coil 152 in which its end is connected with a side of powerline 3, and a switching member 153 for selectively connecting the other end of the secondary coil 152 with the other side of the powerline 3. Here, the switching member 53 comprises a triac preferably.

In the construction of FIG. 6, when the triac 153 is turned off, since the secondary coil 152 is set as open state to the powerline 3, V1 and V2 are set as the same value. On the other hand, when the triac 153 is turned on, the secondary coil 152 is electrically connected with the powerline 3. Accordingly, in this case, when the winding number of the primary coil 151 is N1 and the winding number of the secondary coil 152 is N2, V2 is determined as follows: V2=V1*N1/N2. In this embodiment, when the triac 153 is turned on by setting properly N2 and N1, for example, V2 is set to have low value about degree of 10% compared to V1.

In FIG. 5, when transmitting control data to the load 2 according to the command from the communication member 11, the control member 12 outputs a proper gate signal G1 according to the data value so that the triac 153 of the voltage setting member 15 is turned on/off. The change of on/off of the triac 153 is executed at the zero crossing moment of power voltage, preferably. And, the control member 12 detects input voltage from the current detecting member 14 in response to an uplink data section T3 of FIG. 4, and confirms whether the uplink data are received from the load 2. The control device 10 executes data transmission and reception to the load 2 through the above processes.

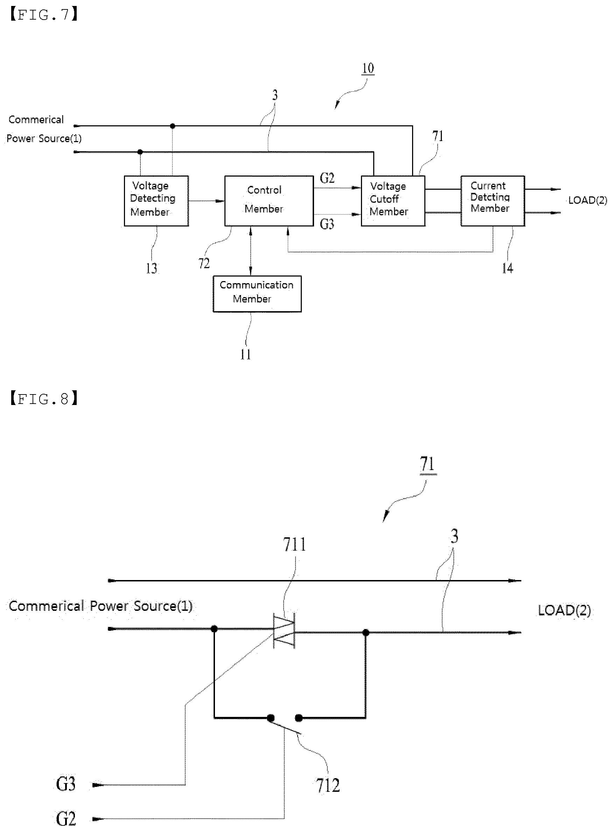

FIG. 7 is a block construction view illustrating the construction of the control device 10 according to the second embodiment of the present invention. As shown in FIG. 7, the construction of the control device 10 will be described the construction of the control device 10 of the second method illustrated in FIGS. 3a and 3b: a constant section of power one period to be supplied to the load 2 are set as a data section, and the power voltage of a data section is set selectively as a lower level, for example, "0" level according to whether data being transmitted to the load 2 are "0" or "1". Also, in FIG. 7, the same reference numbers are numbered to substantially same portions of the FIG. 5 and their explanation will be omitted.

The control device 10 of FIG. 7 comprises a power cutoff member 71 instead of the voltage setting member 15. The power cutoff member 71 is coupled with the powerlines 3 and cuts off power voltage supplied to the load 2 according to gate signals G2 and G3 applied from a control member 72. And, when transmitting data to the load 2, the control member 72 supplies gate signals G2 and G3 to the power cutoff member 71 in response to a downlink data section T1 illustrated in FIG. 3.

FIG. 8 is a circuit construction view illustrating an example of the construction of the power cutoff member 71. As shown in FIG. 8, as a first switching member for performing cutoff of the powerlines 3, for example, a triac 711 is coupled in series to a side of the powerlines 3, and as a second switching member, for example, a relay switch 712 is coupled in parallel to a side of the powerlines 3. And, the triac 711 and the relay switch 712 are turned on/off by gate signals G3 and G2.

In the above-construction, in an idle state that data are not transmitted to the load 2, the control member 72 sets the relay switch 712 as ON state and the triac 711 as OFF state. Accordingly, in this case, driving power from commercial power source 1 is supplied to the load 2 through the relay switch 712.

On the other hand, in case of need of data transmission to the load 2, the control member 72 supplies gate signals G3 and G3 sequentially so that the triac 711 is set as ON state firstly and the relay switch 712 is set as OFF state. Accordingly, in this case, driving power from commercial power source 1 is supplied to the load 2 through the triac 711.

Also, the control member 72 transmits control data to the load 2 through the powerlines 3 by turning on/off the triac 711 in response to the downlink data section T1 of FIG. 3. When the data transmission is finished, the control member 72 turns the relay switch 712 on and turns the triac 711 off again, thereby making the power cutoff member 71 set as an idle state. Other operations, that is, data reception operation and so on from the load 2 are the same as those of FIG. 5 substantially.

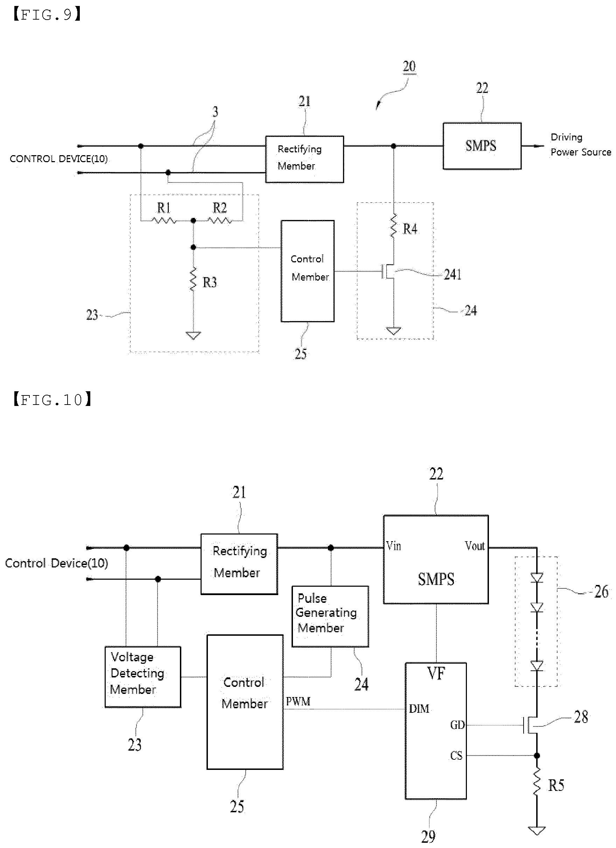

FIG. 9 is a construction view illustrating an example of the construction of the load control member 20 equipped to the load 2. In FIG. 9, a rectifying member 21 and an SMPS(Switching Mode Power Supply) 22 are equipped to the load 2 in general. Only, the SMPS 2 in this construction, as shown in FIG. 4a, cuts off current flowing to the primary coil(not shown) during the uplink data section T3, so that driving current flowing from commercial power source 1 to the load 2 is set as "0" level.

Also, in FIG. 9, a voltage detecting member 23 is equipped with the powerlines 3, preferably, the front end of the rectifying member 21. The voltage detecting member 23 comprises resistors R1 and R2 coupled between the powerlines 3 and a resistor R3 coupled between a coupling node of resistors R1 and R2 and a signal ground. The coupling node of resistors R1 and R2 is coupled with, for example, an analog input stage of a control member 25. The voltage detecting member 23, likewise the voltage detecting member 13 of FIG. 5, divides the commercial power source 1 inputted from the powerlines3, for example, into the voltage of 5V below and then inputs it to the control member 25. Here, the voltage detecting member 23 is installed at the front end of the rectifying member 21 in order that the change of the detecting voltage by the voltage detecting member 23 according to the driving state of the load 2 is minimized.

Also, a pulse generating member 24 is coupled with the powerlines 3. The pulse generating member 24, for example, comprises a resistor R4 and a MOS transistor 241 coupled in series between the powerlines 3 and the signal ground.

The control member 25 comprises, for example, a microprocessor. The control member 25 discriminates the zero crossing point, downlink data section and uplink data section of commercial power source on the basis of the change of detecting voltage by the voltage detecting member 23. Especially, the control member 25 recognizes control data being transmitted from the control device 10 on the base of voltage being inputted from the voltage detecting member 24.

The control member 25 is driven by a program. The control member 25 will be programmed properly according to the construction of the control device 10. The control member 25, as shown in FIG. 5, when it is operated together with the control device 10, discriminates whether the power voltage being inputted from the powerlines 3 is the first power voltage D1 or the second power voltage D2 of FIG. 2a. In this case, the control member 25 discriminates the power voltage through a method of detecting the maximum value of one period of the power voltage or a method of calculating the effective vale of one period of the power voltage. As described above, when the first power voltage D1 is alternating current of 220V and the second power voltage D2 is alternating current of 200V, the effective value of the first power voltage D1 is about 311V and the effective value of the second power voltage D2 is about 283V.

Also, the control member 25, as shown in FIG. 7, when it is operated together with the control device 10, discriminates whether the power voltage being inputted from the powerlines 3 is the third power voltage D3 or the fourth power voltage D4 of FIG. 3a. In this case, the control member 25 performs sampling of the input voltage from the voltage detecting member 23, for example, by 100 microsecond(us) unit during the downlink data section T1 and discriminates whether the power voltage is the third power voltage D3 or the fourth power voltage D4.

Also, when transmitting data to the control device 10, the control member 25 turns on the MOS transistor 241 of the pulse generating member 24 at the uplink data section T3 as shown in FIG. 4, for example, for 0.2ms, thereby generating current pulse P. And, this current pulse P, as described in FIGS. 5 and 7, is detected by the current detecting member 14 and then inputted to the control member 12 in the control device 10.

FIG. 10 is a construction view illustrating an example of the construction in which the load control member 20 as shown in FIG. 9 is applied to an LED illumination device. Also, in FIG. 10, the same reference numerals are used to the same portions substantially of FIG. 9 and so the detailed description about them will be omitted.

In FIG. 10, an end of an LED module 26 is coupled with a voltage output stage Vout of an SMPS 22 and the other end of the LED module 26 is coupled with a signal ground through a transistor 28 for performing cutoff of driving current flowing through the LED module 26 and a resistor R5 for detecting driving current flowing through the LED module 26.

A reference number 29 in the FIG. 10 is an LED driver for driving the LED module 26. A GD terminal of the LED driver 29 is coupled with a gate of the transistor 28 and the CS stage of the LED driver 29 is coupled with the connection node of the transistor 28 and the resistor R5.

When control data for performing the dimming control of the LED illumination device are inputted from the control device 10, a control member 25 receives the control data through a voltage detecting member 23 and thereafter produces a pulse width modulation (PWM) signal for performing dimming control. And, the PWM signal is provided to the LED driver 29. The LED driver 29 changes the PWM signal inputted through the dimming control stage DIM by digital/analog conversion and then produces the reference voltage corresponding to the PWM signal. And, the LED driver 29 turns on/off the transistor 28 in order that the voltage inputted through CS stage has the same value as the reference voltage, thereby properly controlling the driving current flowing through the LED module 26. Also, the LED driver 29 sets properly VF(Voltage Feedback) voltage being supplied to the SMPS 22, thereby controlling output of the SMPS 22 in order to be fit for the present dimming level.

Also, the control member 25 drives the pulse generating member 24 and transmits a reception response signal and so on to the control device 10.

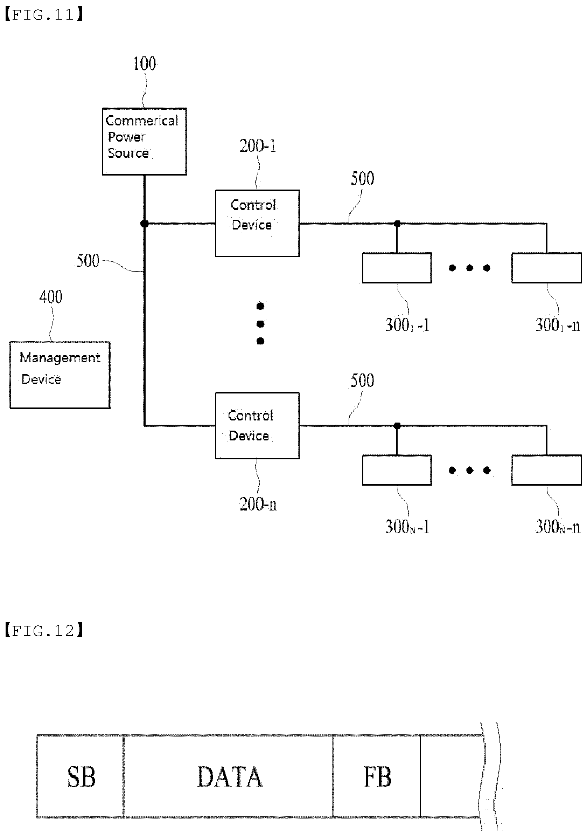

FIG. 11 is a block construction view illustrating an LED illumination system according to the present invention. As shown in FIG.11, a plurality of control devices 200-1 to 200-n are electrically connected to commercial power source 100 through powerlines 500. And, a plurality of LED illumination devices 300₁-1 to 300₁-n and 300_{N}-1 to 300_{N}-n are coupled with the control devices 200-1 to 200-n through powerlines 500.

The control device 200 has the same construction substantially as the control device 10 as shown in FIGS 5 or 7. Also, the LED illumination device 300 has the same construction substantially as the construction as shown in FIG. 10.

A management device 400 is for a manager. The management device 400 performs data communication with the control device 200. A manager controls entirely driving of the illumination device 300 through the management device 400.

The LED illumination device 300 has an inherent ID and a group ID. Plural group IDs can exist. The dimming control of the LED illumination device 300 is performed by the group ID. In case that the group IDs are provided to the LED illumination device 300, various illumination effects can be implemented.

When a manager executes dimming control through the management device 400, the control command corresponding to that is transmitted to the control device 200 and then the control device 200 produces control data corresponding to the control command and then transmits the control data through the powerlines 500. The transmission of the control data is performed by the broadcasting method and in case of need, individual or group ID for defining the forwarding address of the corresponding data is added.

FIG. 12 shows an example of the format construction of data being transmitted and received between the control device 200 and the LED illumination device 300. As shown in FIG. 12, the transmission and reception data include, for example, one bit as start bit and 4 bits as data bit and after this, has the type in which frame bit with one bit and data bit with 4 bits are repeated.

The LED illumination device 300 transmits response data through the powerlines 500 in case that a response is required to the control device 100. As described above, the response data has the type that cuts off the power voltage flowing from the control device 200 to the LED illumination device 300. Accordingly, when plural LED illumination devices 300 transmit response data simultaneously, the collision of data occurred. For this reason, the uplink data transmission from the LED illumination device 300 to the control device 200 is executed by falling type.

And the control device 100 finishes the process corresponding to the control command from the management device 400 when all response data from the LED illumination device 300 in which control data are transmitted are received. Also, in case of need, the control device 200 transmits response data for reporting completion of the control command process to the management device 400.

The above-mentioned LED illumination system can construct an illumination system only by combining the control device 200 and the LED illumination device 300 with the powerelines 500. Accordingly, the LED illumination system can be easily implemented by using the existing illumination wiring. Also, in the above system, since a user can perform very stably the dimming control and so on relating to the entire LED illumination device 300 by using the management device 400, thereby enhancing the convenience of the manager drastically.

This invention has been described in its presently contemplated best mode, and it is clear that it is susceptible to numerous modifications, modes and embodiments within the ability of those skilled in the art and without the exercise of the inventive faculty. Accordingly, the scope of this invention is defined by the scope of the following claims.

## Claims

1. A communication device for performing communication using powerlines (3) comprising:
a first control member (10) coupled with the powerlines (3); and
a second control member (20) installed to a load (2),
wherein the first control member (10) and the second control member (20) are configured to perform data transmission and reception by using the powerlines (3),
wherein the first control member (10) comprises:
a first voltage detecting member (13) coupled with the powerlines (3) and configured to detect a change of a power supply voltage,
a voltage setting member (15) coupled with the powerlines (3) and configured to change and set an effective voltage value of one period of power supply voltage or a voltage level corresponding to a first section of one period of power supply voltage being supplied to the load (2) through the powerlines (3) according to the value of data transmitting to the second control member (20), and
a current detecting member (14) configured to detect a power supply current,
wherein the first control member (10) is configured to:
control the operation of the voltage setting member (15),
change and set the effective voltage value of the power supply voltage being supplied to the load (2) by driving the voltage setting member (15) according to the value of data transmitting to the second control member (20); and
receive data from the second control member (20) by detecting the current pulse during the first section;
wherein the second control member (20) comprises:
a second voltage detecting member (23) coupled with the powerlines (3) and configured to detect a change of the power supply voltage;
a power member (22) configured to produce power for driving the load (2) by using input power, wherein the power member (22) is configured to cut off a flow of power supply current being transmitted to the load (2) through the powerlines (3) during the first section of one period of power supply current, and
a pulse generating member (24) configured to generate a current pulse during the first section;
wherein the second control member (20) is configured to:
receive data being transmitted from the first control member (10) by discriminating the effective voltage value of the power supply voltage on the basis of the detected voltage of the second voltage detecting member (23);
drive the pulse generating member (24) in correspondence to the data value being transmitted to the first control member (10); and
change and set a current level corresponding to a first section of one period of power supply current being supplied to the load (2) through the powerlines (3) according to the value of data transmitting to the first control member (10).

2. The communication device according to claim 1, wherein the first section includes a 0.5ms section that the power supply voltage starts rising from a zero crossing point or a 0.5ms section that the power supply current starts falling from a zero crossing point.

3. The communication device according to claim 1, wherein the first section includes 0.5ms section just before a zero crossing of the power supply current.

4. The communication device according to claim 1, wherein the first section includes 0.5ms section after a zero crossing of the power supply current.

5. The communication device according to claim 1, wherein the first control member (10) is configured to transmit 1 bit of the data per one period of power supply voltage.

6. The communication device according to claim 1, wherein the first control member (10) is configured to:
discriminate the zero crossing point of the power supply voltage on the basis of the detecting of voltage by the first voltage detecting member (13), and
change and set the effective voltage value of the power supply voltage by driving the voltage setting member (13) at the zero crossing time of the power supply voltage.

7. A communication device for performing communication using powerlines (3) comprising:
a first control member (10) coupled with the powerlines (3); and
a second control member (20) installed to a load (2),
wherein the first control member (10) and the second control member (20) are configured to perform data transmission and reception by using the powerlines (3),
the first control member (10) is configured to change and set an effective voltage value of one period of power supply voltage or a voltage level corresponding to a first section of one period of power supply voltage being supplied to the load (2) through the powerlines (3) according to the value of data transmitting to the second control member (10), and comprises:
a first voltage detecting member (13) coupled with the powerlines (3) and configured to detect a change of the power supply voltage,
a voltage cutoff member (71) coupled with the powerlines (3) and configured to perform a cutoff of the power supply voltage supplied to the load (2),
a current detecting member (14) configured to detect a power supply current, and the first control member (10) configured to:
control the operation of the voltage cutoff member (13),
selectively drive the voltage cutoff member (13) according to the value of data transmitting to the second control member (20), and
receive data from the second control member (20) by detecting the current pulse during a third or a fourth section of one period of power supply current, and
the second control member (20) is configured to change and set a current level corresponding to a third or a fourth section of one period of power supply current being supplied to the load through the powerlines (3) according to the value of data transmitting to the first control member (10) and comprises:
a second voltage detecting member (23) coupled with the powerlines (3) and configured to detect a change of the power supply voltage,
a power member (22) configured to produce power for driving the load (2) by using input power, wherein the power member (22) is configured to cut off a flow of the power supply current being transmitted to the load (2) through the powerlines (3) during the third or the fourth section,
a pulse generating member (24) configured to generate a current pulse during the third or the fourth section, and
the second control member (20) further configured to:
receive data being transmitted from the first control member (10) on the basis of the detected voltage of the second voltage detecting member (23), and
drive the pulse generating member (24) in correspondence to the data value being transmitted to the first control member (10).

8. The communication device according to claim 7, wherein the first control member (10) is further configured to selectively drive the voltage cutoff member (71) during the first section of one period of power supply voltage.

9. The communication device according to claim 7, wherein the first control member (10) is further configured to selectively drive the voltage cutoff member (71) during the first section in which the power supply voltage starts rising from a zero crossing point and the second section in which the power supply current starts falling from a zero crossing point.

10. The communication device according to claim 7, wherein the third section includes a 0.5ms section just before a zero crossing of the power supply current.

11. The communication device according to claim 7, wherein the fourth section includes a 0.5ms section after a zero crossing of the power supply current.

12. The communication device according to claim 4 or 7, wherein the first control member (10) further comprises a communication member (11) configured to perform communication with the outside.

13. An LED lighting system having a communication device according to claim 1 or 7, the LED lighting system comprising:
one or more control devices (200-1, ..., 200-n) as first control members (10) and coupled with a commercial power source (100) through the powerlines (3; 500);
one or more LED lighting devices (300₁-1, ..., 300₁-1n; 300_{N}-1, ..., 300_{N}-n) as second control members (20) and coupled with the control devices (200-1, ..., 200-n), respectively, through the powerlines (3; 500); and
a management device (400) configured to perform communication with the control devices (200-1, ..., 200-n);
wherein the control devices (200-1, ..., 200-n) and the LED lighting devices (300₁-1, ..., 300₁-1n; 300_{N}-1, ..., 300_{N}-n) perform the data transmission and reception by using the powerlines (3; 500),
the data communication from the control devices (200-1, ..., 200-n) to the LED lighting devices (300₁-1, ..., 300₁-1n; 300_{N}-1, ..., 300_{N}-n) is executed by a broadcasting method, and
the data communication from the LED lighting devices (300₁-1, ..., 300₁-1n; 300_{N}-1, ..., 300_{N}-n) to the control devices (200-1, ..., 200-n) is executed by a polling method.

14. The LED lighting system according to claim 13, wherein the LED lighting devices (3001-1, ..., 300₁-1n; 300_{N}-1, ..., 300_{N}-n) comprise one or more group IDs, and the control devices transmit dimming data to the LED lighting devices (300₁-1, ..., 300₁-1n; 300_{N}-1, ..., 300_{N}-n) by using the group IDs.

## Patentansprüche

1. Kommunikationsvorrichtung zum Ausführen von Kommunikation über Stromleitungen (3), umfassend:
ein erstes Steuerbauteil (10), das mit den Stromleitungen (3) gekoppelt ist; und
ein zweites Steuerbauteil (20), das auf einer Last (2) installiert ist,
wobei das erste Steuerbauteil (10) und das zweite Steuerbauteil (20) konfiguriert sind, Datenübertragung und -empfang über die Stromleitungen (3) auszuführen,
wobei das erste Steuerbauteil (10) umfasst:
ein erstes Spannungserfassungsbauteil (13), das mit den Stromleitungen (3) gekoppelt ist und konfiguriert ist, eine Änderung einer Stromversorgungsspannung zu erfassen,
ein Spannungseinstellungsbauteil (15), das mit den Stromleitungen (3) gekoppelt ist und konfiguriert ist, einen effektiven Spannungswert einer Periode von Stromversorgungsspannung oder einen Spannungspegel entsprechend einem ersten Teil einer Periode einer Stromversorgungsspannung, die durch die Stromleitungen (3) der Last (2) zugeführt wird, gemäß dem Wert von Daten, die an das zweite Steuerbauteil (20) übertragen werden, zu ändern und einzustellen, und
ein Stromerfassungsbauteil (14), das konfiguriert ist, einen Versorgungsstrom zu erfassen, wobei das erste Steuerbauteil (10) konfiguriert ist zum:
Steuern des Betriebs des Spannungseinstellungsbauteils (15),
Ändern und Einstellen des effektiven Spannungswerts der Stromversorgungsspannung, die der Last (2) zugeleitet wird, durch Antreiben des Spannungseinstellungsbauteils (15) gemäß dem Wert von Daten, die an das zweite Steuerbauteil (20) übertragen werden; und
Empfangen von Daten vom zweiten Steuerbauteil (20) durch Erfassen des Strompulses während des ersten Teils;
wobei das zweites Steuerbauteil (20) umfasst:
ein zweites Spannungserfassungsbauteil (23), das mit den Stromleitungen (3) gekoppelt ist und konfiguriert ist, eine Änderung der Stromversorgungsspannung zu erfassen;
ein Strombauteil (22), das konfiguriert ist, Strom zum Antreiben der Last (2) über Eingangsstrom zu erzeugen, wobei das Strombauteil (22) konfiguriert ist, einen Fluss von Versorgungsstrom, der durch die Stromleitungen (3) übertragen wird, während des ersten Teils einer Versorgungsstromperiode an die Last (2) abzuschalten, und
ein Pulserzeugungsbauteil (24), das konfiguriert ist, einen Strompuls während des ersten Teils zu erzeugen;
wobei das zweite Steuerbauteil (20) konfiguriert ist zum:
Empfangen von Daten, die vom ersten Steuerbauteil (10) durch Unterscheiden des effektiven Spannungswerts von der Stromversorgungsspannung auf der Basis der erfassten Spannung des zweiten Spannungserfassungsbauteils (23) übertragen werden;
Antreiben des Pulserzeugungsbauteils (24) in Übereinstimmung mit dem Datenwert, der vom ersten Steuerbauteil (10) übertragen wird; und
Ändern und Einstellen eines Strompegels entsprechend einem ersten Teil einer Periode eines Versorgungsstroms, der durch die Stromleitungen (3) der Last (2) zugeleitet wird, gemäß dem Wert von Daten, die an das erste Steuerbauteil (10) übertragen werden.

2. Kommunikationsvorrichtung nach Anspruch 1, wobei der erste Teil einen 0,5 ms Teil enthält, bei dem die Stromversorgungsspannung von einem Nulldurchgangspunkt zu steigen beginnt, oder einen 0,5 ms Teil, bei dem die Versorgungsstrom von einem Nulldurchgangspunkt zu fallen beginnt.

3. Kommunikationsvorrichtung nach Anspruch 1, wobei der erste Teil einen 0,5 ms Teil unmittelbar vor einem Nulldurchgang des Versorgungsstroms enthält.

4. Kommunikationsvorrichtung nach Anspruch 1, wobei der erste Teil einen 0,5 ms Teil nach einem Nulldurchgang des Versorgungsstroms enthält.

5. Kommunikationsvorrichtung nach Anspruch 1, wobei das erste Steuerbauteil (10) konfiguriert ist, 1 Bit der Daten pro einer Periode von Stromversorgungsspannung zu übertragen.

6. Kommunikationsvorrichtung nach Anspruch 1, wobei das erste Steuerbauteil (10) konfiguriert ist zum:
Unterscheiden des Nulldurchgangspunkts der Stromversorgungsspannung auf der Basis der Spannungserfassung durch das erste Spannungserfassungsbauteil (13) und
Ändern und Einstellen des effektiven Spannungswertes der Stromversorgungsspannung durch Antreiben des Spannungseinstellungselements (13) zur Nulldurchgangszeit der Stromversorgungsspannung.

7. Kommunikationsvorrichtung zum Ausführen von Kommunikation über Stromleitungen (3), umfassend:
ein erstes Steuerbauteil (10), das mit den Stromleitungen (3) gekoppelt ist; und
ein zweites Steuerbauteil (20), das an einer Last (2) installiert ist,
wobei das erste Steuerbauteil (10) und das zweite Steuerbauteil (20) konfiguriert sind, Datenübertragung und -empfang über die Stromleitungen (3) auszuführen,
das erste Steuerbauteil (10) konfiguriert ist, einen effektiven Spannungswert einer Periode von Stromversorgungsspannung oder einen Spannungspegel entsprechend einem ersten Teil einer Periode von Stromversorgungsspannung, die durch die Stromleitungen (3) der Last (2) zugeleitet wird, gemäß dem Wert von Daten, die an das zweite Steuerbauteil (10) übertragen werden, zu ändern und einzustellen, und umfasst:
ein erstes Spannungserfassungsbauteil (13), das mit den Stromleitungen (3) gekoppelt ist und konfiguriert ist, eine Änderung der Stromversorgungsspannung zu erfassen,
ein Spannungsabschaltbauteil (71), das mit den Stromleitungen (3) gekoppelt ist und konfiguriert ist, ein Abschalten der Stromversorgungsspannung, die der Last (2) zugeführt wird, auszuführen,
ein Stromerfassungsbauteil (14), das konfiguriert ist, einen Versorgungsstrom zu erfassen, und
das erste Steuerbauteil (10) konfiguriert ist zum:
Steuern des Betriebs des Spannungsabschaltbauteils (13),
selektiven Antreiben des Spannungsabschaltbauteils (13) gemäß dem Wert von Daten, die an das zweite Steuerbauteil (20) übertragen werden, und
Empfangen von Daten vom zweiten Steuerbauteil (20) durch Erfassen des Strompulses während eines dritten oder eines vierten Teils einer Versorgungsstromperiode, und
das zweite Steuerbauteil (20) konfiguriert ist, einen Strompegel entsprechend einem dritten oder einem vierten Teil einer Periode eines Versorgungsstroms, der durch die Stromleitungen (3) der Last zugeführt wird, gemäß dem Wert von Daten, die an das erste Steuerbauteil (10) übertragen werden, zu ändern und einzustellen, und umfasst:
ein zweites Spannungserfassungsbauteil (23), das mit den Stromleitungen (3) gekoppelt ist und konfiguriert ist, eine Änderung der Stromversorgungsspannung zu erfassen;
ein Strombauteil (22), das konfiguriert ist, Strom zum Antreiben der Last (2) über Eingangsstrom zu erzeugen, wobei das Strombauteil (22) konfiguriert ist, einen Fluss von Versorgungsstrom, der durch die Stromleitungen (3) an die Last (2) übertragen wird, während des dritten oder des vierten Teils abzuschalten, und
ein Pulserzeugungsbauteil (24), das konfiguriert ist, einen Strompuls während des dritten oder des vierten Teils zu erzeugen, und
wobei das zweite Steuerbauteil (20) konfiguriert ist zum:
Empfangen von Daten, die vom ersten Steuerbauteil (10) auf der Basis der erfassten Spannung des zweiten Spannungserfassungsbauteils (23) übertragen werden und
Antreiben des Pulserzeugungsbauteils (24) in Übereinstimmung mit dem Datenwert, der zum ersten Steuerbauteil (10) übertragen wird.

8. Kommunikationsvorrichtung nach Anspruch 7, wobei das erste Steuerbauteil (10) ferner konfiguriert ist, das Spannungsabschaltbauteil (71) während des ersten Teils einer Periode einer Stromversorgungsspannung selektiv anzutreiben.

9. Kommunikationsvorrichtung nach Anspruch 7, wobei das erste Steuerbauteil (10) ferner konfiguriert ist, das Spannungsabschaltbauteil (71) während des ersten Teils, in dem die Stromversorgungsspannung von einem Nulldurchgangspunkt zu steigen beginnt, und des zweiten Teils, in dem die Versorgungsstrom von einem Nulldurchgangspunkt zu fallen beginnt, selektiv anzutreiben.

10. Kommunikationsvorrichtung nach Anspruch 7, wobei der dritte Teil einen 0,5 ms Teil unmittelbar vor einem Nulldurchgang des Versorgungsstroms enthält.

11. Kommunikationsvorrichtung nach Anspruch 7, wobei der vierte Teil einen 0,5 ms Teil nach einem Nulldurchgang des Versorgungsstroms enthält.

12. Kommunikationsvorrichtung nach Anspruch 4 oder 7, wobei das erste Steuerbauteil (10) ferner ein Kommunikationsbauteil (11) umfasst, das konfiguriert ist, Kommunikation mit der Außenseite auszuführen.

13. LED-Beleuchtungssystem mit einer Kommunikationsvorrichtung nach Anspruch 1 oder 7, wobei das LED-Beleuchtungssystem umfasst:
eine oder mehrere Steuervorrichtungen (200-1, ..., 200-n) als erste Steuerbauteile (10) und mit einer Netzstromquelle (100) durch die Stromleitungen (3; 500) gekoppelt;
eine oder mehrere LED-Beleuchtungsvorrichtungen (300₁-1, ..., 300₁-1n, 300_{N}-1, ..., 300_{N}-n) als zweite Steuerbauteile (20) und mit den jeweiligen Steuervorrichtungen (200-1, ..., 200-n) durch die Stromleitungen (3; 500) gekoppelt; und
eine Verwaltungsvorrichtung (400), die konfiguriert ist, Kommunikation mit den Steuervorrichtungen (200-1, ..., 200-n) auszuführen;
wobei die Steuervorrichtungen (200-1, ..., 200-n) und die LED-Beleuchtungsvorrichtungen (300₁-1, ..., 300₁-1n, 300_{N}-1, ..., 300_{N}-n) die Datenübertragung und den Empfang über die Stromleitungen (3; 500) ausführen, die Datenkommunikation von den Steuervorrichtungen (200-1, ..., 200-n) zu den LED-Beleuchtungsvorrichtungen (300₁-1, ..., 300₁-1n, 300_{N}-1, ..., 300_{N}-n) durch ein Rundfunkverfahren durchgeführt wird, und
die Datenkommunikation von den LED-Beleuchtungsvorrichtungen (300₁-1, ..., 300₁-1n, 300_{N}-1, ..., 300_{N}-n) zu den Steuervorrichtungen (2001, ..., 200-n) durch ein Abfrageverfahren durchgeführt wird.

14. LED-Beleuchtungssystem nach Anspruch 13, wobei die LED-Beleuchtungsvorrichtungen (300₁-1, ..., 300₁-1n, 300_{N}-1, ..., 300_{N}-n) eine oder mehrere Gruppenkennungen IDs umfassen und die Steuervorrichtungen Abblenddaten an die LED-Beleuchtungsvorrichtungen (300₁-1, ..., 300₁-1n, 300_{N}-1, ..., 300_{N}-n) übertragen, indem sie die Gruppenkennungen verwenden.

## Revendications

1. Dispositif de communication pour effectuer une communication en utilisant des lignes électriques (3), comprenant :
un premier organe de commande (10) couplé aux lignes électriques (3) ; et
un deuxième organe de commande (20) installé à une charge (2),
dans lequel le premier organe de commande (10) et le deuxième organe de commande (20) sont configurés pour effectuer une transmission et une réception de données en utilisant les lignes électriques (3),
dans lequel le premier organe de commande (10) comprend :
un premier organe de détection de tension (13) couplé aux lignes électriques (3) et configuré pour détecter un changement d'une tension d'alimentation électrique,
un organe de réglage de tension (15) couplé aux lignes électriques (3) et configuré pour changer et régler une valeur de tension efficace d'une période de tension d'alimentation électrique ou un niveau de tension correspondant à une première section d'une période de tension d'alimentation électrique qui est fournie à la charge (2) par l'intermédiaire des lignes électriques (3) en fonction de la valeur de transmission de données au deuxième organe de commande (20), et
un organe de détection de courant (14) configuré pour détecter un courant d'alimentation électrique,
dans lequel le premier organe de commande (10) est configuré pour :
la commande du fonctionnement de l'organe de réglage de tension (15),
le changement et le réglage de la valeur de tension efficace de la tension d'alimentation électrique qui est fournie à la charge (2) par le pilotage de l'organe de réglage de tension (15) en fonction de la valeur de transmission de données au deuxième organe de commande (20) ; et
la réception de données en provenance du deuxième organe de commande (20) par la détection de l'impulsion de courant au cours de la première section ;
dans lequel le deuxième organe de commande (20) comprend :
un deuxième organe de détection de tension (23) couplé aux lignes électriques (3) et configuré pour détecter un changement de la tension d'alimentation électrique ;
un organe de puissance (22) configuré pour produire une puissance pour le pilotage de la charge (2) en utilisant une puissance d'entrée, dans lequel l'organe de puissance (22) est configuré pour couper un flux de courant d'alimentation électrique qui est transmis à la charge (2) par l'intermédiaire des lignes électriques (3) au cours de la première section d'une période de courant d'alimentation électrique, et
un organe de génération d'impulsion (24) configuré pour générer une impulsion de courant au cours de la première section ;
dans lequel le deuxième organe de commande (20) est configuré pour :
la réception de données qui sont transmises depuis le premier organe de commande (10) par la discrimination de la valeur de tension efficace de la tension d'alimentation électrique sur la base de la tension détectée du deuxième organe de détection de tension (23) ;
le pilotage de l'organe de génération d'impulsion (24) en correspondance avec la valeur de données qui est transmise au premier organe de commande (10) ; et
le changement et le réglage d'un niveau de courant correspondant à une première section d'une période de courant d'alimentation électrique qui est fourni à la charge (2) par l'intermédiaire des lignes électriques (3) en fonction de la valeur de transmission de données au premier organe de commande (10).

2. Dispositif de communication selon la revendication 1, dans lequel la première section inclut une section de 0,5 ms à laquelle la tension d'alimentation électrique commence à monter à partir d'un point de passage par zéro ou une section de 0,5 ms à laquelle le courant d'alimentation électrique commence à descendre à partir d'un point de passage par zéro.

3. Dispositif de communication selon la revendication 1, dans lequel la première section inclut une section de 0,5 ms juste avant un passage par zéro du courant d'alimentation électrique.

4. Dispositif de communication selon la revendication 1, dans lequel la première section inclut une section de 0,5 ms juste après un passage par zéro du courant d'alimentation électrique.

5. Dispositif de communication selon la revendication 1, dans lequel le premier organe de commande (10) est configuré pour transmettre 1 bit de données par période de tension d'alimentation électrique.

6. Dispositif de communication selon la revendication 1, dans lequel le premier organe de commande (10) est configuré pour :
la discrimination du point de passage par zéro de la tension d'alimentation électrique sur la base de la détection de tension par le premier organe de détection de tension (13), et
le changement et le réglage de la valeur de tension efficace de la tension d'alimentation électrique par le pilotage de l'organe de réglage de tension (13) au temps de passage par zéro de la tension d'alimentation électrique.

7. Dispositif de communication pour effectuer une communication en utilisant des lignes électriques (3), comprenant :
un premier organe de commande (10) couplé aux lignes électriques (3) ; et
un deuxième organe de commande (20) installé à une charge (2),
dans lequel le premier organe de commande (10) et le deuxième organe de commande (20) sont configurés pour effectuer une transmission et une réception de données en utilisant les lignes électriques (3),
le premier organe de commande (10) est configuré pour le changement et le réglage d'une valeur de tension efficace d'une période de tension d'alimentation électrique ou d'un niveau de tension correspondant à une première section d'une période de tension d'alimentation électrique qui est fournie à la charge (2) par l'intermédiaire des lignes électriques (3) en fonction de la valeur de transmission de données au deuxième organe de commande (10), et comprend :
un premier organe de détection de tension (13) couplé aux lignes électriques (3) et configuré pour détecter un changement de la tension d'alimentation électrique,
un organe de coupure de tension (71) couplé aux lignes électriques (3) et configuré pour effectuer une coupure de la tension d'alimentation électrique fournie à la charge (2), et
un organe de détection de courant (14) configuré pour détecter un courant d'alimentation électrique, et
le premier organe de commande (10) est configuré pour :
la commande du fonctionnement de l'organe de coupure de tension (13),
le pilotage sélectif de l'organe de coupure de tension (13) en fonction de la valeur de transmission de données au deuxième organe de commande (20), et
la réception de données en provenance du deuxième organe de commande (20) par la détection de l'impulsion de courant au cours d'une troisième ou quatrième section d'une période de courant d'alimentation électrique, et
le deuxième organe de commande (20) est configuré pour le changement et le réglage d'un niveau de courant correspondant à une troisième ou quatrième section d'une période de courant d'alimentation électrique qui est fourni à la charge par l'intermédiaire des lignes électriques (3) en fonction de la valeur de transmission de données au premier organe de commande (10), et comprend :
un deuxième organe de détection de tension (23) couplé aux lignes électriques (3) et configuré pour détecter un changement de la tension d'alimentation électrique,
un organe de puissance (22) configuré pour produire une puissance pour le pilotage de la charge (2) en utilisant une puissance d'entrée, dans lequel l'organe de puissance (22) est configuré pour couper un flux du courant d'alimentation électrique qui est transmis à la charge (2) par l'intermédiaire des lignes électriques (3) au cours de la troisième ou quatrième section,
un organe de génération d'impulsion (24) configuré pour générer une impulsion de courant au cours de la troisième ou quatrième section, et
le deuxième organe de commande (20) est en outre configuré pour :
la réception de données qui sont transmises depuis le premier organe de commande (10) sur la base de la tension détectée du deuxième organe de détection de tension (23), et
le pilotage de l'organe de génération d'impulsion (24) en correspondance avec la valeur de données qui est transmise au premier organe de commande (10).

8. Dispositif de communication selon la revendication 7, dans lequel le premier organe de commande (10) est en outre configuré pour le pilotage sélectif de l'organe de coupure de tension (71) au cours de la première section d'une période de tension d'alimentation électrique.

9. Dispositif de communication selon la revendication 7, dans lequel le premier organe de commande (10) est en outre configuré pour le pilotage sélectif de l'organe de coupure de tension (71) au cours de la première section dans laquelle la tension d'alimentation électrique commence à monter à partir d'un point de passage par zéro et de la deuxième section dans laquelle le courant alimentation électrique commence à descendre à partir d'un point de passage par zéro.

10. Dispositif de communication selon la revendication 7, dans lequel la troisième section inclut une section de 0,5 ms juste avant un passage par zéro du courant d'alimentation électrique.

11. Dispositif de communication selon la revendication 7, dans lequel la quatrième section inclut une section de 0,5 ms juste après un passage par zéro du courant d'alimentation électrique.

12. Dispositif de communication selon la revendication 4 ou 7, dans lequel le premier organe de commande (10) comprend en outre un organe de communication (11) configuré pour effectuer une communication avec l'extérieur.

13. Système d'éclairage à DEL comportant un dispositif de communication selon la revendication 1 ou 7, le système d'éclairage à DEL comprenant :
un ou plusieurs dispositifs de commande (200-1, ..., 200-n) en tant que premiers organes de commande (10) et couplés à une source d'électricité commerciale (100) par l'intermédiaire des lignes électriques (3 ; 500) ;
un ou plusieurs dispositifs d'éclairage à DEL (300₁-1, ..., 300₁-1n ; 300_{N}-1, ... ; 300_{N}-n) en tant que deuxièmes organes de commande (20) et couplés respectivement aux dispositifs de commande (200-1, ..., 200-N) par l'intermédiaire des lignes électriques (3 ; 500) ; et
un dispositif de gestion (400) configuré pour effectuer une communication avec les dispositifs de commande (200-1, ..., 200-n) ;
dans lequel les dispositifs de commande (200-1, ..., 200-N) et les dispositifs d'éclairage à DEL (300₁-1, ..., 300₁-1n ; 300_{N}-1, ... ; 300_{N}-n) effectuent la transmission et la réception de données par l'utilisation des lignes électriques (3 ; 500),
la communication de données des dispositifs de commande (200-1, ..., 200-n) aux dispositifs d'éclairage à DEL (300₁-1, ..., 300₁-1n ; 300_{N}-1, ... ; 300_{N}-n) est exécutée par un procédé de diffusion, et
la communication de données des dispositifs d'éclairage à DEL (300₁-1, ..., 300₁-1n ; 300_{N}-1, ... ; 300_{N}-n) aux dispositifs de commande (200-1, ..., 200-n) est exécutée par un procédé de sondage.

14. Système d'éclairage à DEL selon la revendication 13, dans lequel les dispositifs d'éclairage à DEL (300₁-1, ..., 300₁-1n ; 300_{N}-1, ... ; 300_{N}-n) comprennent un ou plusieurs identifiants de groupe, et les dispositifs de commande transmettent des données de gradation d'éclairage aux dispositifs d'éclairage à DEL (300₁-1, ..., 300₁-1n ; 300_{N}-1, ... ; 300_{N}-n) par l'utilisation des identifiants de groupe.
